# EUROPEAN PATENT SPECIFICATION

(11) **EP 2 832 521 B1**
(45) Date of publication and mention of the grant of the patent: **27.06.2018**
(21) Application number: 13290176.0
(22) Date of filing: 29.07.2013
(51) Int. Cl.: B29C 45/14, B29C 45/16, B29C 37/00

(54) **Pipe connection arrangement and method**
Rohrverbindungsanordnung und Verfahren
Agencement de raccordement de tuyau et méthode

(43) Date of publication of application: 04.02.2015
(73) Proprietor: MANN+HUMMEL GmbH, 71636 Ludwigsburg (DE)
(72) Inventor: Girard, Dominique, 53970 Montigné le Brillant (FR)

(56) References cited:
- AT-A1- 506 383
- US-A1- 2013 146 170

## Description

### TECHNICAL FIELD

The invention relates to a technique for joining together two hollow components, such as pipes or ducts.

The invention relates more particularly to an arrangement for coupling a rubber pipe to a plastic pipe.

It notably finds application, but is not limited thereto, in the automotive industry.

More particularly, it advantageously finds application an internal combustion engine of a motor vehicle or a stationary engine for industrial applications.

### BACKGROUND OF THE INVENTION

In the automotive industry, it is often necessary to join pipe ends of different materials. Classically, these pipes or ducts allow the routing of fluids (liquids or gases) in an engine of a motor vehicle. For example, they are used to convey a cooling liquid, or are used in oil circuits or as air ducts to route the air from an inlet to the air intake manifold of an engine.

One method to connect a thermoplastic pipe to a rubber pipe for instance is to fit the end of the thermoplastic pipe inside the end of the rubber pipe and to compress the rubber pipe on the thermoplastic pipe by using a clamp, for example a screw clamp, which is fitted around the end of the rubber pipe.

A disadvantage of such a solution is that it requires two molds to obtain each of the thermoplastic and rubber pipes, and a screw clamp. It also requires at least three steps for the coupling and fastening of two pipes, i.e.:
- firstly, mounting the screw clamp on the rubber pipe;
- secondly, fitting the thermoplastic pipe in the rubber pipe;
- thirdly, tightening up the screw clamp.

This solution thus involves extra labor and material costs and is error-prone.

Also, the tightness of such a connection tends to decrease with time.

Another technique for connecting two pipes of different materials is to overmold one pipe end over the other pipe end (called carrier or substrate).

Overmolding or "insert molding" is a technique well known for the molding of plastics. It consists of placing a preformed part (or section of a part) into an injection mold and injecting a material around it. If the insert material and the injected material are compatible, a diffusion of molecules between both materials takes place. This diffusion (called melt adhesion) creates a bond between both materials and ensures the coupling of the parts, after the injected material has solidified.

Overmolding operations are somewhat limited in that the substrate material and the overmolded material must be chemically compatible for the chemical bond to occur. If the materials are incompatible, the bond is rarely strong enough to resist decoupling and to ensure optimum tightness.

Overmolding plastics to rubber for instance proves problematic. The document AT 506 383 A1 shows a connection and fitting, with at least one insert. The insert forms a connection, and is overmoulded with a plastic sheath. The insert and the sheath are made from plastics which cannot be adhesively joined or joined by welding. According to the publication an additional sealing element material should be chosen that in particular cohesively connects in the production, with the plastics of the insert and the plastic coating and thus ensures in a particularly simple manner a tight connection between the plastic components.

There remains a significant need for a way of connecting pipes made of chemically incompatible materials, without these drawbacks and limitations.

### SUMMARY OF THE INVENTION

The present invention seeks to ameliorate the aforesaid prior art disadvantages by providing an alternative overmolding method of coupling two hollow components, such as pipes, which materials are not compatible.

More specifically, the aim of the invention is that of providing an overmolding technique for connecting pipes made of incompatible materials that is simple and inexpensive to implement, and that reduces the risk of leakage in the fitting.

This problem is solved by providing a pipe connection arrangement comprising a first pipe having a flange on one end and a second pipe having an end molded over said flange.

According to the invention, said molded end of said second pipe encapsulates said flange of said first pipe.

The invention proposes to join two hollow components, such as pipes, by overmolding one of said components over the other, and also by providing a mechanical link between the components.

Thus, even when the materials of the components are incompatible, the solution of the invention provides a strong coupling between the components.

Compared to the prior art, such a technique offers the advantage of requiring less parts to ensure the connection of the components and of being simple to implement.

In accordance with the present invention, the inner diameter of said flange is superior to the inner diameter of said first pipe.

In accordance with the present invention, said end of said second pipe covers the outer and inner surfaces of said flange.

Such an embodiment maximizes the mutual anchoring of the pipes.

In accordance with the present invention, the inner diameter of said second pipe is equal to the inner diameter of said first pipe.

In accordance with the present invention, the materials of the first and second pipes are chemically incompatible.

The solution of the invention provides a pipe connection arrangement with strong mechanical anchoring, even when there is no melt adhesion between the respective materials of the pipes.

In accordance with a not claimed aspect, said first pipe is in rubber and said second pipe is made of thermoplastic.

In accordance with a not claimed aspect, said first pipe is in Polyacrylate rubber.

In accordance with another aspect of the present invention, said second pipe is in Polypropylene.

According to the invention, the rubber pipe is in plastic material, made by plastic blow molding.

The thermoplastic pipe can be made of any type of thermoplastic or in any other material than thermoplastic.

### BRIEF DESCRIPTION OF THE DRAWINGS

Figure 1 shows an exterior view of a pipe connection arrangement according to an exemplary embodiment of the invention;
Figure 2 is a sectional view of a substrate pipe end that is designed to be connected to another pipe according to the pipe connection process of the invention;
Figure 3 is a sectional view of a part of an injection mold adapted for obtaining the pipe connection arrangement according to the invention;
Figure 4 shows the injection mold of figure 3, in which the substrate pipe end of Figure 2 is fitted;
Figure 5 shows the injection mold of figure 3, after the injection of material over the substrate pipe end;
Figure 6 is a sectional view of Figure 1.

### DETAILED DESCRIPTION

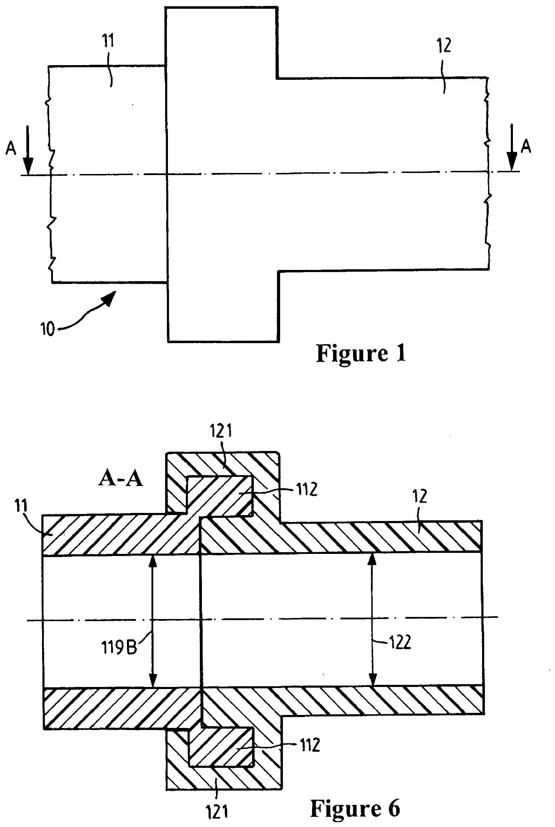

Figure 1 shows a pipe coupling arrangement 10 according to the invention between two pipes 11, 12 of an air circuit of a motor vehicle engine. This arrangement is particularly suited when a connection between pipes, which are made of chemically incompatible materials, is required.

The coupling of the pipes 11, 12 is achieved by molding over one end of the first pipe (or substrate pipe) 11, an end of the second pipe 12.

In this example, the substrate pipe 11 is made of rubber, such as Polyacrylate rubber, and the overmolded pipe 12 is made of thermoplastic, such as Polypropylene.

As will be described in more detail below, the ends of pipes 11, 12 are mated by molding the pipe 12 (or the pipe end) in a mold already containing the pipe 11 end, the pipe 11 having been manufactured beforehand by any suitable means.

The shape of the end of each pipe 11, 12 is chosen so as to create an efficient mechanical anchoring of both pipes 11, 12, even if they are made of chemically incompatible materials.

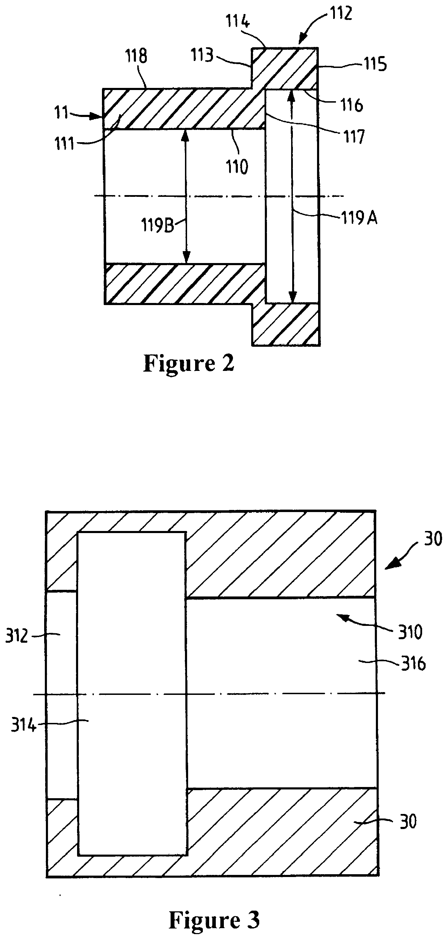

Referring now to Figure 2, the substrate pipe 11 comprises a tubular body 111 (which is shown partially) ended by a circular flange 112. The internal diameter 119B of the hollow tubular body 111 is inferior to the internal diameter 119A of the hollow flange 112.

The shape of the flange 112 is not limited to the one illustrated in Figure 2. Indeed, in some embodiments, the flange 112 may have a cylinder shape. In other embodiments, it may have a different shape, for example a conical or spherical shape, or it may have a hexagonal cross section.

In the embodiment presented in figure 2, the flange 112 extends radially from the axial outer surface 118 of the pipe body 111 and forms an annular enlarged part of the pipe body 111. The flange surface comprises a first radial outer surface 113 (extending radially from the outer surface 118), prolonged by an axial outer surface 114, a second radial outer surface 115, an axial inner surface 116 and a radial inner surface 117. The radial inner surface 117 is prolonged by the axial inner surface 110 of the pipe body 111.

Figure 3 presents a mold 30 adapted for obtaining a pipe connection arrangement according to an exemplary embodiment of the invention, by molding the pipe 12 over the end of the substrate pipe 11 of figures 1 and 2.

As illustrated in the sectional view of Figure 3, the injection mold 30 has a circular cavity 310, which creates the volume for obtaining the overmolded pipe 12.

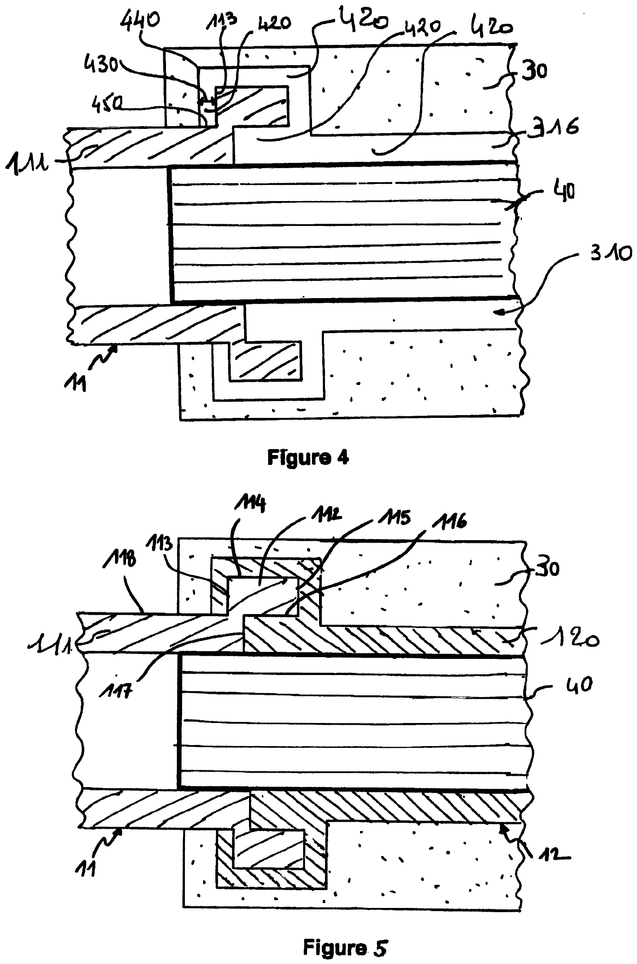

The cavity 310 comprises three parts, i.e. two lateral cavities (a left part 312 and a right part 316) separated by a wider central cavity 314. The left cavity 312 and the central cavity 314, as shown figure 4, are adapted to receive the flanged end of the substrate pipe 11. The diameter of the left cavity 312 is substantially equal to the outer diameter of the pipe body 111. The flange 112 of the substrate pipe 11 and part of the pipe body 111 are received in the central cavity 314, which has a larger diameter than the two lateral cavities 312, 316.

Depending on the desired shape of the overmolded pipe 12, the central cavity 314 and the lateral cavity 316 may have different diameters and various shapes.

Referring now to Figure 4, the end of substrate pipe 11 is first fitted inside the cavity 310 and a rigid tubular core 40 is then inserted in the cavity 310.

More precisely, an end of the core 40 is placed inside the end of substrate pipe 11, the external diameter of the core 40 being substantially equal to the internal diameter 119B of the pipe tubular body 111.

Each of those operations can be performed, depending upon the embodiments, either manually, either with a robot hand.

Once the substrate pipe 11 is fitted inside the cavity 310, there remains a free space 420 around the flange 112 and the core 40. In particular, the flange 112 and a part 450 of the body 111 are pushed far enough into the cavity 310 in order to create a gap 430 between the cavity wall 440 and the first radial outer surface 113 of the flange 112. The free space 420 finally extends between the walls of the cavity 310 and the first radial outer surface 113, the axial outer surface 114, the second radial outer surface 115, the axial inner surface 116 and the radial inner surface 117 of the flange 112. As the flange 112 has an inner diameter 119A larger than the inner diameter 119B of the body 111, and as a consequence larger than the external diameter of the core 40, the free space 420 also extends between the flange 112 and the core 40 (more precisely, according to figure 2, between the axial inner surface 116 of the flange 112 and the core 40).

As illustrated in Figure 5, the pipe 12 is then molded over the end of the rubber pipe 11 and around the core 40 by the injection of molten thermoplastic 120 in the free space 420.

Thus, the coupling of the pipes 11, 12 is formed by the effect of overmolding, i.e. by surrounding the flange 112 of the substrate pipe 11 with molten plastic 120.

The molten plastic 120 forming the second pipe 12 thus encapsulates (i.e. encloses or surrounds on all sides) the flanged end of the substrate pipe 11.

More precisely, because of the specific shape of the free space 420 that surrounds the flange 112 of the substrate pipe 11 before the injection step, the flange 112 is caught up (or flooded) in the overmolded material 120 after the injection step.

As shown in Figure 5, the overmolded material 120, and thus the end 121 of pipe 12, surrounds the first radial outer surface 113, the axial outer surface 114, the second radial outer surface 115, the axial inner surface 116 and the radial inner surface 117 of the flange 112.

The overmolded material 120 when solidifying grips onto these surfaces of the flange 112.

As shown in Figure 6, the two pipes 11, 12 (once removed from the mold 30) are then mechanically attached to each other, in a tight manner, and in communication with each other so as to convey any type of fluid.

The way the flange 112 of the substrate pipe 11 is encapsulated within the end 121 of the overmolded pipe 12 (the flange 112 being "sandwiched" radially and axially by the overmolded pipe) ensures proper fastening and sealing of the rubber pipe 11 and the thermoplastic pipe 12.

It is to be noted that the inner diameter 119B of pipe 11 is equal to the inner diameter 122 of pipe 12.

The solution of the invention is advantageously applicable for joining pipes or other members intended for conveying fluids (gases, vapors or liquids). It is advantageously -applicable in the automobile industry, in an internal combustion engine of a motor vehicle for instance.

The present invention eliminates the additional step according to the prior art solution of adding a screw clamp on the rubber pipe, and provides a pipe coupling arrangement which results in reduced labor, materials and costs.

The overmolding technique described previously allows the introduction of adhesive between the outer surface of the substrate pipe 11 and the surrounding overmolded material 120 so as to provide tightness of the connection when the pipes 11, 12 are used to convey liquids for instance.

## Claims

1. Pipe connection arrangement (10), comprising a first pipe (11) having a flange (112) on one end and a second pipe (12) having an end (121) molded over said flange (112), wherein said molded end (121) of said second pipe (12) encapsulates said flange (112) of said first pipe (11), wherein the inner diameter (119A) of said flange (112) is superior to the inner diameter (119B) of said first pipe (11), and wherein said molded end (121) of said second pipe (12) covers the outer and inner surfaces (113, 114, 115, 116, 117) of said flange (112), wherein the materials of the first and second pipes (11, 12) are chemically incompatible, wherein said first pipe (11) is in plastic material, made by plastic blow molding, and wherein the inner diameter (122) of said second pipe (12) is equal to the inner diameter (119B) of said first pipe (11).

2. Pipe connection arrangement according to claim 1, **characterized in that** said second pipe (12) is in polypropylene.

3. Pipe connection arrangement, according to claims 1 or 2, **characterized in that** it also comprises thickness means located on a frontier between said first pipe (11) and said molded end of said second pipe (12).

4. Method for joining two pipes (11, 12) to a pipe connection arrangement according to any one of the previous claims by a second pipe (12) overmolded over the end of a first pipe (11), wherein an injection mold (30) has a cavity (310) which creates the volume for obtaining the overmolded pipe (12).

## Patentansprüche

1. Rohrverbindungsanordnung (10), umfassend ein erstes Rohr (11) mit einem Flansch (112) an einem Ende und ein zweites Rohr (12) mit einem über den Flansch (112) geformten Ende (121), wobei das geformte Ende (121) des zweiten Rohrs (12) den Flansch (112) des ersten Rohrs (11) einkapselt, wobei der Innendurchmesser (119A) des Flansches (112) größer als der Innendurchmesser (119B) des ersten Rohrs (11) ist und wobei das geformte Ende (121) des zweiten Rohrs (12) die äußeren und inneren Oberflächen (113, 114, 115, 116, 117) des Flansches (112) überdecken, wobei die Materialien des ersten und zweiten Rohrs (11, 12) chemisch inkompatibel sind, wobei das erste Rohr (11) aus Kunststoff ist, hergestellt durch Blasformen von Kunststoff, und wobei der Innendurchmesser (122) des zweiten Rohrs (12) gleich dem Innendurchmesser (119B) des ersten Rohrs (11) ist.

2. Rohrverbindungsanordnung nach Anspruch 1, **dadurch gekennzeichnet, dass** das zweite Rohr (12) aus Polypropylen ist.

3. Rohrverbindungsanordnung nach Anspruch 1 oder 2, **dadurch gekennzeichnet, dass** sie auch Dickeneinrichtungen an einer Grenze zwischen dem ersten Rohr (11) und dem geformten Ende des zweiten Rohrs (12) umfasst.

4. Verfahren zum Zusammenfügen von zwei Rohren (11, 12) an eine Rohrverbindungsanordnung nach einem der obigen Ansprüche mittels eines zweiten Rohrs (12), welches über das Ende des ersten Rohrs (11) gespritzt wird, wobei ein Spritzgießwerkzeug (30) einen Hohlraum (310) hat, welcher das Volumen erzeugt, um das umspritzte Rohr (12) erhalten.

## Revendications

1. Agencement de raccordement de tuyaux (10), comprenant un premier tuyau (11) ayant une bride (112) sur une extrémité et un second tuyau (12) ayant une extrémité (121) moulée par-dessus ladite bride (112), ladite extrémité moulée (121) dudit second tuyau (12) encapsulant ladite bride (112) dudit premier tuyau (11), le diamètre interne (119A) de ladite bride (112) étant supérieur au diamètre interne (119B) dudit premier tuyau et ladite extrémité moulée (121) dudit second tuyau (12) couvrant les surfaces externes et internes (113, 114, 115, 116, 117) de ladite bride (112), les matériaux des premier et second tuyaux (11, 12) étant chimiquement incompatibles, ledit premier tuyau (11) étant en matière plastique, fabriqué par moulage par soufflage de plastique, et le diamètre interne (122) dudit second tuyau (12) étant égal au diamètre interne (119B) dudit premier tuyau (11).

2. Agencement de raccordement de tuyaux selon la revendication 1, **caractérisé en ce que** ledit second tuyau (12) est en polypropylène.

3. Agencement de raccordement de tuyaux selon les revendications 1 ou 2, **caractérisé en ce qu'**il comprend également des éléments d'épaisseur situés sur une frontière entre ledit premier tuyau (11) et ladite extrémité moulée dudit second tuyau (12).

4. Procédé de liaison de deux tuyaux (11, 12) à un agencement de raccordement de tuyaux selon l'une quelconque des revendications précédentes par un second tuyau (12) surmoulé par-dessus l'extrémité d'un premier tuyau (11), un moule d'injection (30) ayant une cavité (310) qui crée le volume pour obtenir le tuyau surmoulé (12).
